(19) Europäisches Patentamt

European Patent Office

Office européen des brevets

(11) **EP 0 987 289 A1**

(12) **EUROPÄISCHE PATENTANMELDUNG**

(43) Veröffentlichungstag:
**22.03.2000   Patentblatt 2000/12**

(51) Int Cl.⁷: **C08J 5/18**, B32B 27/32,
B32B 15/08, C23C 14/20,
B29C 55/14
// C08L23/12, B32B27/20,
B65D65/40

(21) Anmeldenummer: **99117856.7**

(22) Anmeldetag: **10.09.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **16.09.1998  DE 19842376**

(71) Anmelder: **Mitsubishi Polyester Film GmbH**
**65203 Wiesbaden (DE)**

(72) Erfinder:
• **Pfeifer, Herbert**
**55126 Mainz (DE)**

• **Davis, Richard Lee**
**65187 Wiesbaden (DE)**
• **Hellmann, Jörg**
**55134 Mainz (DE)**

(74) Vertreter: **Schweitzer, Klaus, Dr.**
**Patentanwaltskanzlei Zounek,**
**Industriepark Kalle-Albert,**
**Rheingaustrasse 190-196**
**65203 Wiesbaden (DE)**

(54) **Biaxial orientierte Polypropylenfolie, Verfahren zu ihrer Herstellung und ihre Verwendung**

(57)    Die Erfindung betrifft eine biaxial orientierte Polypropylenfolie, die bei gutem Verarbeitungsverhalten nach ihrer Metallisierung eine sehr gute Sauerstoffbarriere besitzt, und die aufgebaut ist aus mindestens einer Basisschicht, wobei wobei die Folie dadurch gekennzeichnet ist, daß ihre planare Orientierung delta p größer als 0,0138 ist.

**Beschreibung**

Die Erfindung betrifft eine biaxial orientierte Polypropylenfolie, die aus mindestens einer Basisschicht besteht. Die Folie zeichnet sich durch ein gutes Verarbeitungsverhalten und durch gute optische Eigenschaften aus und besitzt nach ihrer Metallisierung oder nach ihrer Beschichtung mit oxidischen Materialien eine sehr gute Sauerstoffbarriere. Die Erfindung betrifft weiterhin ein Verfahren zur Herstellung der Folie und ihre Verwendung.

Biaxial orientierte Polypropylenfolien werden im Verpackungs- oder im industriellen Sektor hauptsächlich dort verwendet, wo ihre vorteilhaften Eigenschaften d.h. eine gute Optik, hohe mechanische Festigkeiten, eine gute Sperrwirkung, insbesondere gegenüber Gasen, eine gute Dimensionsstabilität in der Wärme und eine ausgezeichnete Planlage benötigt werden.

Bei Lebensmittelverpackungen wird in der Regel eine hohe Sperrwirkung gegenüber Gasen, Wasserdampf und Aromastoffen verlangt (gleichbedeutend mit einer geringen Permeation). Ein gängiges Verfahren, solche Verpackungen herzustellen, besteht darin, die dafür verwendeten Kunststoffolien mit Aluminium im Hochvakuum zu bedampfen bzw. zu metallisieren. Weitere gängige Verfahren bestehen darin, die Folien mit oxidischen Materialien (z.B. $SiO_x$, oder $Al_xO_y$) oder mit Wasserglas zu beschichten. Hierbei handelt es sich im wesentlichen um transparente Beschichtungen.

Die Sperrwirkung gegenüber den oben genannten Stoffen hängt im wesentlichen von der Art der Polymeren in der Folie und der Güte der aufgebrachten Sperrschichten ab. So wird mit metallisierten, biaxial orientierten Polyesterfolien eine sehr hohe Sperrwirkung gegenüber Gasen, wie Sauerstoff und Aromastoffen, erzielt. Gegenüber Wasserdampf erreicht man eine hohe Sperrwirkung am besten mit metallisierten, biaxial orientierten Polypropylenfolien. Daneben gibt es Anwendungsfälle, bei denen neben einer sehr guten Wasserdampfbarriere auch eine akzeptable Sauerstoffbarriere gewünscht wird.

Nach dem Stand der Technik ist es weder hinreichend bekannt, worauf die Barrierewirkung von metallisierten oder oxydisch beschichteten Polypropylenfolien im einzelnen beruht noch wie diese entscheidend zu verbessern ist. Wichtige Einflußgrößen sind offensichtlich die Substratoberfläche, die Art des Substratpolymers sowie dessen Morphologie. Allgemein wird davon ausgegangen, daß glatte Substratoberflächen bessere Barriereeigenschaften ergeben.

Detaillierte Untersuchungsergebnisse über den Einfluß der Substratoberfläche von verschiedenen Kunststoffolien auf die Barriereeigenschaften sind in der Dissertation von H. Utz (Technische Universität München 1995: "Barriereeigenschaften aluminiumbedampfter Kunststoffolien") zu finden.

Aufgabe der vorliegenden Erfindung war es nun, eine koextrudierte, biaxial orientierte Polypropylenfolie zur Verfügung zu stellen, die sich weiterhin durch gute optische Eigenschaften auszeichnet. Gleichzeitig soll die Folie nach der Metallisierung oder nach Beschichtung mit oxidischen Materialien eine gegenüber dem Stand der Technik verbesserten Sauerstoffbarriere aufweisen, und sich durch eine gute Herstellbarkeit und Verarbeitbarkeit auszeichnen.

Der Glanz zumindestens der zu bedampfenden Oberfläche soll größer als 120 und die Trübung der Folie soll kleiner als 3,0 sein.

Geringe Sauerstoffpermeation bedeutet im vorliegenden Fall, daß durch die metallisierte Folie weniger als 30 $cm^3$ Sauerstoff pro Quadratmeter und pro Tag diffundieren sollen, wenn Luft mit einem Druck von 1 bar darauf lastet.

Die Folie soll den bekannten Verpackungsfolien dieser Art in den übrigen Eigenschaften mindestens gleichwertig sein. Sie soll sich beispielsweise einfach und preiswert herstellen lassen, sowie auf den herkömmlichen Maschinen gut verarbeiten lassen (d.h., z.B. nicht Blocken).

Gelöst wird die Aufgabe durch eine biaxial orientierte, ein- oder mehrschichtige Polypropylenfolie (OPP-Folie) mit zumindestens einer Basisschicht B, die zu mindestens 80 Gew.-% aus thermoplastischem Polypropylen besteht, wobei die Folie dadurch gekennzeichnet ist, daß ihre planare Orientierung delta p größer als 0,0138 ist.

Zur Erzielung der gewünschten Sauerstoffpermeation metallisierter Folien muß entsprechend der Lösung der Aufgabenstellung die planare Orientierung delta p der erfindungsgemäßen Folie größer als ein vorgegebener Zahlenwert sein. Dieser Zahlenwert ist durch delta p =0,0138 festgelegt.

Für die Erzielung von guten Sauerstoffbarrieren metallisierter OPP-Folien ist demzufolge eine hohe planare Orientierung delta p erforderlich. Ist die planare Orientierung delta p der Folie kleiner als der oben angegebene Wert, so ist die Barriere im vorliegendem Sinne schlecht; ist die planare Orientierung delta p der Folie größer als der oben angegebene Wert, so ist die Barriere im vorliegenden Sinne gut.

In einer bevorzugten Ausführungsform der erfindungsgemäßen Folie beträgt die planare Orientierung delta p der erfindungsgemäßen Folie mehr als 0,0140 und in einer ganz besonder bevorzugten Ausführungsform mehr als 0,0143.

In den bevorzugten und den besonders bevorzugten Ausführungsformen hat die erfindungsgemäße Folie in der metallisierten Form eine besonders gute Sauerstoffbarriere.

Weiterhin hat es sich für die Erzielung einer hohen Barriere als günstig erwiesen, wenn der Brechungsindex $n_{ND}$ ($n_z$) in Dickenrichtung der Folie kleiner als ein vorgegebener Wert ist. Dieser Wert ist $n_{ND}$ = 0,1495.

Erfindungsgemäß ist die Folie zumindest einschichtig aufgebaut. Sie umfaßt dann als Schicht eine Basisschicht B, die die zur Verarbeitung der Folie notwendigen Pigmente enthält. Die Folie kann aber auch zweischichtig aufgebaut sein. Sie umfaßt dann als Schichten eine Basisschicht B und die Deckschicht A. In einer bevorzugten Ausführungsform der Erfindung ist die Folie dreischichtig aufgebaut und weist auf der einen Seite der Schicht B (=Basisschicht) die Schicht A und auf der anderen Seite der Schicht B eine weitere Schicht C aus Polypropylen auf. In diesem Fall enthalten zumindestens eine der beiden Deckschichten, vorzugsweise jedoch beide Deckschichten die für die Herstellung und Verarbeitung der Folie förderlichen Pigmente.

Für die Materialien der verschiedenen Schichten können prinzipiell verschiedene Rohstoffe verwendet werden. Es ist jedoch bevorzugt, die einzelnen Schichten auf Basis von Polypropylen rohstoffen herzustellen.

Die **Basisschicht** der erfindungsgemäßen Mehrschichtfolie enthält Polyolefine, vorzugsweise Propylenpolymere, und gegebenenfalls weitere zugesetzte Additive in jeweils wirksamen Mengen. Im allgemeinen enthält die Basisschicht mindestens 50 Gew.-%, vorzugsweise 75 bis 100 Gew.-%, insbesondere 90 bis 100 Gew.-%, der Propylenpolymeren, jeweils bezogen auf die Basisschicht.

Das Propylenpolymere enthält im allgemeinen 90 bis 100 Gew.-%, vorzugsweise 95 bis 100 Gew.-%, insbesondere 98 bis 100 Gew.-%, Propyleneinheiten und besitzt im allgemeinen einen Schmelzpunkt von 120°C oder höher, vorzugsweise 150 bis 170 °C, und im allgemeinen einen Schmelzflußindex von 0,5 g/10 min bis 8 g/10 min, vorzugsweise 2 g/10 min bis 5 g/10 min, bei 230 °C und einer Kraft von 21,6 N (DIN 53 735). Isotaktisches Propylenhomopolymer mit einem ataktischen Anteil von 15 Gew.-% und weniger, Copolymere von Ethylen und Propylen mit einem Ethylengehalt von 10 Gew.-% oder weniger, Copolymere von Propylen mit $C_4$-$C_8$-$\alpha$-Olefinen mit einem $\alpha$-Olefingehalt von 10 Gew.-% oder weniger, Terpolymere von Propylen, Ethylen und Butylen mit einem Ethylengehalt von 10 Gew.-% oder weniger und mit einem Butylengehalt von 15 Gew.-% oder weniger stellen bevorzugte Propylenpolymere für die Basisschicht dar, wobei isotaktisches Propylenhomopolymer besonders bevorzugt ist. Die angegebenen Gewichtsprozente beziehen sich auf das jeweilige Polymere.

Des weiteren ist eine Mischung aus den genannten Propylenhomo- und/oder -copolymeren und/oder -terpolymeren und anderen Polyolefinen, insbesondere aus Monomeren mit 2 bis 6 C-Atomen, geeignet, wobei die Mischung mindestens 50 Gew.-%, insbesondere mindestens 75 Gew.-%, Propylenpolymerisat enthält. Geeignete andere Polyolefine in der Polymermischung sind Polyethylene, insbesondere HDPE, LDPE und LLDPE, wobei der Anteil dieser Polyolefine jeweils 15 Gew.-%, bezogen auf die Polymermischung, nicht übersteigt.

In einer bevorzugten Ausführungsform der erfindungsgemäßen Folie wird das Propylenpolymere der Basisschicht peroxidisch abgebaut. Hierdurch können auch die Barriereeigenschaften der metallisierten Folien noch weiter verbessert werden.

Ein Maß den Grad des Abbaus des Polymeren ist der sogenannte Abbaufaktor A, welcher die relative Änderung des Schmelzflußindex nach DIN 53 735 des Polypropylens, bezogen auf das Ausgangspolymere, angibt.

$$A = \quad Mfl_1/MFl_2$$

$MFl_1$ = Schmelzflußindex des Propylenpolymeren vor dem Zusatz des organischen Peroxids

$MFl_2$ = Schmelzflußindex des peroxidisch abgebauten Propylenpolymeren

Im allgemeinen liegt der Abbaufaktor A des eingesetzten Propylenpolymeren in einem Bereich von 3 bis 15, vorzugsweise 6 bis 10. Als organische Peroxide sind Dialkylperoxide besonders bevorzugt, wobei unter einem Alkylrest die üblichen gesättigten geradkettigen oder verzweigten niederen Alkylreste mit bis zu sechs Kohlenstoffatomen verstanden werden. Insbesondere sind 2,5-Dimethyl-2,5-di(t-butylperoxy)-hexan oder Di-t-butylperoxid bevorzugt.

Im allgemeinen kann die Basisschicht Stabilisatoren und Neutralisationsmittel in jeweils wirksamen Mengen sowie gegebenenfalls Gleitmittel, Antistatika und/oder Kohlenwasserstoffharz enthalten. Insbesondere die Kohlenwasserstoffharze können dazu genutzt werden, die Barriereeigenschaften der metallisierten Folien

Als Harze sind insbesondere Kohlenwasserstoffharze bevorzugt. Die Kohlenwasserstoffharze können teilweise oder vollständig hydriert sein. Als Harze kommen grundsätzlich synthetische Harze oder Harze natürlichen Ursprungs in Frage. Es hat sich als besonders vorteilhaft erwiesen, Harze mit einem Erweichungspunkt von größer 80 °C (gemessen nach DIN 1995-U4 bzw. ASTM E-28) einzusetzen, wobei solche mit einem Erweichungspunkt von 100 bis 180 °C, insbesondere 120 bis 160 °C, bevorzugt sind. Die Einarbeitung des Harzes in die Folie (z. B. Einschnecken- oder Kaskadenextruder) erfolgt vorzugsweise in Form eines Masterbatches, welches in den Extruder zugegeben wird. Üblich sind beispielsweise Masterbatche, in denen 30 bis 70 Gew.-%, vorzugsweise 50 Gew.-%, Propylenhomopolymeres und 70 bis 30 Gew.-%, vorzugsweise 50 Gew.-%, Kohlenwasserstoffharz enthalten sind. Die Angaben in Gew.-% beziehen sich auf das Gesamtgewicht an Propylenpolymer und Kohlenwasserstoffharz.

Unter den zahlreichen Harzen sind Kohlenwasserstoffharze bevorzugt, und zwar in Form der Erdölharze (Petroleumharze), Styrolharze, Cyclopentadienharze und Terpenharze (diese Harze sind in Ullmanns Encyklopädie der techn. Chemie, 4. Auflage, Band 12, Seiten 525 bis 555, beschrieben).

Die Erdölharze sind solche Kohlenwasserstoffharze, die durch Polymerisation von tiefzersetzten (deep-decomposed) Erdölmaterialien in Gegenwart eines Katalysators hergestellt werden. Diese Erdölmaterialien enthalten gewöhnlich ein Gemisch von harzbildenden Substanzen wie Styrol, Methylstyrol, Vinyltoluol, Inden, Methylinden, Butadien, Isopren, Piperylen und Pentylen. Die Styrolharze sind Homopolymere von Styrol oder Copolymere von Styrol mit anderen Monomeren wie Methylstyrol, Vinyltoluol und Butadien. Die Cyclopentadienharze sind Cyclopentadienhomopolymere oder Cyclopentadiencopolymere, die aus Kohlenteerdestillaten und zerlegtem Erdölgas erhalten werden. Diese Harze werden hergestellt, indem die Materialien, die Cyclopentadien enthalten, während einer langen Zeit bei hoher Temperatur gehalten werden. In Abhängigkeit von der Reaktionstemperatur können Dimere, Trimere oder Oligomere erhalten werden.

Die Terpenharze sind Polymerisate von Terpenen, d. h. Kohlenwasserstoffen der Formel $C_{10}H_{16}$, die in fast allen etherischen Ölen oder ölhaltigen Harzen von Pflanzen enthalten sind, und phenolmodifizierte Terpenharze. Als spezielle Beispiele der Terpene sind Pinen, α-Pinen, Dipenten, Limonen, Myrcen, Camphen und ähnliche Terpene zu nennen. Bei den Kohlenwasserstoffharzen kann es sich auch um die sogenannten modifizierten Kohlenwasserstoffharze handeln. Die Modifizierung erfolgt im allgemeinen durch Reaktion der Rohstoffe vor der Polymerisation, durch Einführung spezieller Monomere oder durch Reaktion des polymerisierten Produkts, wobei insbesondere Hydrierungen oder Teilhydrierungen vorgenommen werden.

Als Kohlenwasserstoffharze werden außerdem Styrolhomopolymerisate, Styrolcopolymerisate, Cyclopentadienhomopolymerisate, Cyclopentadiencopolymerisate und/oder Terpenpolymerisate mit einem Erweichungspunkt von jeweils oberhalb 100 °C eingesetzt (bei den ungesättigten Polymerisaten ist das hydrierte Produkt bevorzugt). Ganz besonders bevorzugt werden die Cyclopentadienpolymerisate mit einem Erweichungspunkt von 140 °C und darüber in der Basisschicht eingesetzt.

Bei einem mehrschichtigen Aufbau der Folie umfasst diese wenigstens eine Deckschicht A, welche auf der vorstehend beschriebenen Basisschicht B aufgebracht ist. Für diese Deckschicht können prinzipiell die gleichen Polymere verwendet werden, wie für die Basisschicht. Daneben können in die Deckschicht auch andere Materialien enthalten sein, wobei dann die Deckschicht bevorzugt aus einem Gemisch von Polymeren, einem Copolymeren oder einem Homopolymeren besteht. Das gleiche gilt für die Deckschicht C einer drei- oder mehrschichtigen Folie.

Die Deckschicht A (und die Deckschicht C, falls vorhanden) besteht (bestehen) in der Regel aus α-Olefinen mit 2 bis 10 Kohlenstoffatomen.

Im allgemeinen enthält die Deckschicht

ein Propylenhomopolymer oder
ein Copolymer von

Ethylen und Propylen oder
Ethylen und Butylen oder
Propylen und Butylen oder
Ethylen und einem anderen α-Olefin mit 5 bis 10 Kohlenstoffatomen oder
Propylen und einem anderen α-Olefin mit 5 bis 10 Kohlenstoffatomen oder

ein Terpolymer von

Ethylen und Propylen und Butylen oder
Ethylen und Propylen und einem anderen α-Olefin mit 5 bis 10 Kohlenstoffatomen oder

eine Mischung aus zwei oder mehreren der genannten Homo-, Co- und Terpolymeren oder
ein Blend aus zwei oder mehreren der genannten Homo-, Co- und Terpolymeren, gegebenenfalls gemischt mit einem oder mehreren der genannten Homo-, Co- und Terpolymeren.

Besonders bevorzugt enthält die Deckschicht im wesentlichen

ein Propylenhomopolymer oder
ein Copolymer von

Ethylen und Propylen oder
Ethylen und Butylen-1 oder
Propylen und Butylen-1 oder

ein Terpolymer von

Ethylen und Propylen und Butylen-1 oder
eine Mischung aus zwei oder mehreren der genannten besonders bevorzugten Homo-, Co- und Terpolymeren oder
ein Blend aus zwei oder mehreren der genannten besonders bevorzugten Homo-, Co- und Terpolymeren, gegebenenfalls gemischt mit einem oder mehreren der genannten Homo-, Co- und Terpolymeren,

wobei insbesondere Propylenhomopolymer oder

statistische Ethylen-Propylen-Copolymere mit
einem Ethylengehalt von 1 bis 10 Gew.-%, bevorzugt 2 bis 8 Gew.-%, oder
statistische Propylen-Butylen-1-Copolymere mit
einem Butylengehalt von 4 bis 25 Gew.-%, bevorzugt 10 bis 20 Gew.-%, jeweils bezogen auf das Gesamtgewicht
des Copolymeren, oder statistische Ethylen-Propylen-Butylen-1-Terpolymere mit

einem Ethylengehalt von 1 bis 10 Gew.-%, bevorzugt 2 bis 6 Gew.-%, und
einem Butylen-1-Gehalt von 3 bis 20 Gew.-%, bevorzugt 8 bis 10 Gew.-%,
jeweils bezogen auf das Gesamtgewicht des Terpolymeren, oder

ein Blend aus einem Ethylen-Propylen-Butylen-1-Terpolymeren und einem Propylen-Butylen-1-Copolymeren

mit einem Ethylengehalt von 0,1 bis 7 Gew.-%
und einem Propylengehalt von 50 bis 90 Gew.-%
und einem Butylen-1-Gehalt von 10 bis 40 Gew.-%,
jeweils bezogen auf das Gesamtgewicht des Polymerblends, bevorzugt sind.

Das in der Deckschicht eingesetzte Propylenhomopolymere enthält zum überwiegenden Teil (mindestens 90 %) Propylen und besitzt einen Schmelzpunkt von 140 °C oder höher, vorzugsweise 150 bis 170 °C, wobei isotaktisches Homopolypropylen mit einem n-heptanlöslichen Anteil von 6 Gew.-% und weniger, bezogen auf das isotaktische Homopolypropylen, bevorzugt ist. Das Homopolymere bzw. das in dieser enthaltene Homopolymere hat im allgemeinen einen Schmelzflußindex von 0,5 g/10 min bis 15 g/10 min, vorzugsweise 2,0 g/10 min bis 10 g/10 min.

Die in der Deckschicht eingesetzten vorstehend beschriebenen Copolymeren weisen im allgemeinen einen Schmelzflußindex von 2 bis 20 g/10 min, vorzugsweise von 4 bis 15 g/10 min, auf. Der Schmelzpunkt liegt im Bereich von 120 bis 140 °C. Die in der Deckschicht eingesetzten Terpolymeren haben einen Schmelzflußindex im Bereich von 2 bis 20 g/10 min, vorzugsweise von 4 bis 15 g/10 min, und einen Schmelzpunkt im Bereich von 120 bis 140 °C. Das vorstehend beschriebene Blend aus Co- und Terpolymeren hat einen Schmelzflußindex von 5 bis 9 g/10 min und einen Schmelzpunkt von 120 bis 150 °C. Alle vorstehend angegebenen Schmelzflußindices werden bei 230 °C und einer Kraft von 21,6 N (DIN 53 735) gemessen.

Gegebenenfalls können die Deckschichtpolymeren in der gleichen Weise wie vorstehend für die Basisschicht beschrieben peroxidisch abgebaut sein, wobei grundsätzlich die gleichen Peroxide verwendet werden. Der Abbaufaktor für die Deckschichtpolymeren liegt im allgemeinen in einem Bereich von 3 bis 15, vorzugsweise 6 bis 10. Auch hier kann sich der peroxidische Abbau der Deckschichtmaterialien günstig auf die Barriere nach der Metallisierung auswirken.

Gegebenenfalls können der/den Deckschicht/en in gleicher Weise wie vorstehend für die Basisschicht beschrieben ebenfalls Kohlenwasserstoffharze zugesetzt werden. Die Deckschichten enthalten im allgemeinen 1 bis 40 Gew.-%, insbesondere 2 bis 30 Gew.-%, vorzugsweise 3 bis 20 Gew.-%, Harz. Ausführungsformen mit harzhaltigen Deckschichten sind besonders vorteilhaft bezüglich ihrer Optik wie Glanz und Transparenz. Auch hier kann sich die Zugabe von Kohlenwasserstoffharzen günstig auf die Barriere nach der Metallisierung der Folien auswirken. Im allgemeinen sollten harzhaltige Deckschichten Antiblockmittel enthalten, um eine gute Maschinengängigkeit zu gewährleisten.

Die erfindungsgemäße Folie umfaßt zumindest die vorstehend beschriebene Basisschicht. Als Mehrschichtfolie umfasst sie zumindestens noch eine Deckschicht A und eventuell noch eine weitere Deckschict C. Die Deckschicht C ist dabei auf der gegenüberliegenden Seite der Basisschicht B angeordnet. Gegebenenfalls kann/können auch eine oder mehrere Zwischenschicht/en zwischen der Basis- und der/den Deckschicht/en aufgebracht werden.

Bevorzugte Ausführungsformen der Mehrschichtfolie sind dreischichtig. Aufbau, Dicke und Zusammensetzung einer zweiten Deckschicht können unabhängig von der bereits vorhandenen Deckschicht gewählt werden, wobei die zweite Deckschicht ebenfalls eine der vorstehend beschriebenen Polymeren oder Polymermischungen enthalten kann, welche aber nicht mit der der ersten Deckschicht identisch sein muß. Die zweite Deckschicht kann jedoch auch andere gängige Deckschichtpolymere enthalten.

Die Dicke der Deckschicht/en ist größer als 0,1 μm und liegt vorzugsweise im Bereich von 0,2 bis 5 μm,

insbesondere 0,4 bis 3 µm, wobei beidseitige Deckschichten gleich oder verschieden dick sein können.

Die Gesamtdicke der erfindungsgemäßen Polyolefin-Mehrschichtfolie kann innerhalb weiter Grenzen variieren und richtet sich nach dem beabsichtigten Einsatz. Sie beträgt vorzugsweise 3 bis 100 µm, insbesondere 8 bis 60 µm, wobei die Basisschicht etwa 50 bis 96 % der Gesamtfoliendicke ausmacht.

Die Dichte der Folie liegt im allgemeinen bei 0,9 g/cm$^2$ oder darüber, vorzugsweise im Bereich von 0,9 bis 0,97 g/cm$^3$.

Zur Verbesserung der Hafteigenschaften der Deckschicht/en kann mindestens eine Oberfläche der Folie corona- oder flammbehandelt werden, wobei gegebenenfalls die entsprechende Behandlung an beiden Oberflächen vorgenommen werden und gleich oder verschieden sein kann.

Um bestimmte Eigenschaften der erfindungsgemäßen Polyolefinfolie noch weiter zu verbessern, können sowohl die Basisschicht als auch die Deckschicht/en weitere Zusätze in einer jeweils wirksamen Menge enthalten, vorzugsweise Antistatika und/oder Antiblockmittel und/oder Gleitmittel und/oder Stabilisatoren und/oder Neutralisationsmittel, die mit den Propylenpolymeren der Basisschicht und der Deckschicht/en verträglich sind, mit Ausnahme der Antiblockmittel, die im allgemeinen unverträglich sind. Alle Mengenangaben in der folgenden Ausführung in Gewichtsprozent (Gew.-%) beziehen sich jeweils auf die Schicht oder Schichten, der oder denen das Additiv zugesetzt sein kann.

Bevorzugte Antistatika sind Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit -Hydroxy-($C_1$-$C_4$)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,005 bis 0,5 Gew.-%. Des weiteren wird Glycerinmonostearat in einer Menge von 0,005 % bis 0,5 Gew.-% bevorzugt als Antistatikum eingesetzt. Zur Erreichung guter Barrierewerte und einer guten Metallhaftung ist es zweckmäßig, so gut wie möglich auf Antistaika zu verzichten.

Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen, bevorzugt werden Benzoguanamin-formaldehyd-Polymere, Siliciumdioxid und Calciumcarbonat. Die wirksame Menge an Antiblockmittel liegt im Bereich von 0,001 bis 2 Gew.-%, vorzugsweise 0,01 bis 0,8 Gew.-%. Die mittlere Teilchengröße liegt zwischen 1 und 6 µm, insbesondere 2 und 5 µm, wobei Teilchen mit einer kugelförmigen Gestalt, wie in der EP-A-0 236 945 und der DE-A-38 01 535 beschrieben, besonders geeignet sind. Bevorzugt werden die Antiblockmittel den Deckschichten zugesetzt.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,001 bis 3 Gew.-%, vorzugsweise 0,002 bis 1 Gew.-%. Besonders geeignet ist der Zusatz von höheren aliphatischen Säureamiden im Bereich von 0,001 bis 0,25 Gew.-% in der Basisschicht und/oder den Deckschichten. Ein insbesondere geeignetes aliphatisches Säureamid ist Erucasäureamid. Zur Erzielung guter Barrierewerte und einer guten Metallhafteung ist es zweckmäßig, auf Gleitmittel weitgehend zu verzichten.

Als Stabilisatoren können die üblichen stabilisierend wirkenden Verbindungen für Ethylen-, Propylen- und andere α-Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate.

Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxy-phenyl)-Propionat oder 1,3,5-Trimethyl-2,4,6-tris(3,5-di-Tertiärbutyl-4-Hydroxybenzyl)benzol sind besonders vorteilhaft.

Neutralisationsmittel sind vorzugsweise Calciumstearat und/oder Calciumcarbonat einer mittleren Teilchengröße von höchstens 0,7 µm, einer absoluten Teilchengröße von kleiner 10 µm und einer spezifischen Oberfläche von mindestens 40 m$^2$/g.

Zur Erzielung der genannten Folieneigenschaften, insbesondere den Permeationswerten nach Metallisierung der Folien, hat es sich darüber hinaus als günstig erwiesen, wenn die Folienoberflächen entsprechende Eigenschaften und Topographien aufweisen. Für die hier beschriebenen Folien ist es von Vorteil, wenn zumindestens eine der beiden Folienoberflächen durch die folgenden Parameter beschrieben werden kann

a) mittlere Rauhigkeit $R_a$
b) Haft-/Gleitreibung µ dieser Seite gegen sich selbst und durch die
c) Anzahl der Erhebungen/Vorsprünge N/mm$^2$.

Vorteilhaft ist es, wenn die Folie so ausgebildet ist, daß auf dieser zuvor genannten Deckschicht

a) der $R_a$-Wert zwischen 20 und 300 nm

b) die Haft-/Gleitreibung $\mu_c$ dieser Schicht gegen sich selbst kleiner als 0,55 und

c) die Anzahl der Erhebungen/Vorsprünge N/mm$^2$ durch die Gleichungen

$$A_{h2} - B_{h2} * \log h/\mu m < \log N_C/mm^2 < A_{h3} - B_{h3} * \log h/\mu m \qquad (1)$$

0,05µm < h < 1,0 µm
$A_{h2}$ = -1,000
$B_{h2}$ = 3,70
$A_{h3}$ = 2,477;
$B_{h3}$ = 2,22

$$A_{d2} - B_{d2} * \log d/\mu m < \log N_C/mm^2 < A_{d3} - B_{d3} * \log d/\mu m \qquad (2)$$

0,2µm < d < 10µm
$A_{d2}$ = 1,700;
$B_{d2}$ = 3,86
$A_{d3}$ = 4,700;
$B_{d3}$ = 2,70
ausgedrückt wird.

In einer bevorzugten Ausführungsform liegt der $R_a$-Wert zwischen 30 und 250 nm und insbesondere zwischen 35 und 200 nm.

In einer bevorzugten Ausführungsform ist die Haft-/Gleitreibung $\mu_C$ dieser Schicht gegen sich selbst kleiner als 0,50 und insbesondere kleiner als 0,40.

In einer bevorzugten Ausführungsform besitzen die Konstanten $A_{h2}$ bis $B_{h2}$ der Gleichung (1) die Werte $A_{h2}$ = - 0,523, $B_{h2}$ = 3,523, $A_{h3}$ = 2,300 und $B_{h3}$ = 2,3, in einer besonders bevorzugten Ausführungsform die Werte $A_{h2}$ =0,00, $B_{h2}$ = 3,300, $A_{h3}$ = 2,000 und $B_{h3}$ = 2,400 und ganz besonders bevorzugt die Werte $A_{h2}$ = 1,420, $B_{h2}$ = 2,500, $A_{h3}$ = 2,000 und $B_{h3}$ = 3h000.

In einer bevorzugten Ausführungsform besitzen die Konstanten $A_{d2}$ bis $B_{d3}$ der Gleichung (2) die Werte $A_{d2}$ = 2,00, $B_{d2}$ = 3,630, $A_{d3}$ = 4,40 und $B_{d3}$ = 2,70, in einer bevorzugten Ausführungsform die Werte $A_{d2}$ = 2,400, $B_{d2}$ = 3,720, $A_{d3}$ = 4,000 und $B_{d3}$ = 2,600 und ganz besonders bevorzugt die Werte $A_{d2}$ = 3,400, $B_{d2}$ = 2,400, $A_{d3}$ = 4,000 und $B_{d3}$ = 3,300.

Für die hier beschriebenen Folien hat es sich darüber hinaus als zweckmäßig erwiesen, wenn die Folienoberfläche, die im nachhinein metallisiert oder mit oxidischen Materialien beschichtet wird, folgender Bedingungen gehorcht:

$$\log N/mm^2 < 1,4 - 2,5 * \log h/\mu m \qquad (3)$$

mit 0,05 µm < h < 1,00 µm

$$\log N/mm^2 < 3,4 - 2,4 * \log d/\mu m \qquad (4)$$

mit
0,2 µm < d < 10 µm
N in Anzahl/mm$^2$
h in µm
d in µm.

Zwischen der Basisschicht und den Deckschicht(en) kann sich gegebenenfalls noch eine Zwischenschicht befinden. Diese kann wiederum aus den für die Basisschichten beschriebenen Polymeren bestehen. In einer besonders bevorzugten Ausführungsform besteht sie aus dem für die Basisschicht verwendeten Polypropylen. Sie kann auch die beschriebenen üblichen Additive enthalten. Die Dicke der Zwischenschicht ist im allgemeinen größer als 0,3µm und liegt vorzugsweise im Bereich von 0,5 bis 15µm, insbesondere im Bereich von 1,0 bis 10µm und ganz besonders bevorzugt im Bereich von 1,0 bis 5 µm.

Bei der besonders vorteilhaften dreischichtigen Ausführungsform der erfindungsgemäßen Folie ist die Dicke der Deckschicht(en) A (und C) im allgemeinen größer als 0,1 µm und liegt allgemein im Bereich von 0,2 bis 3,0 µm, vorteilhaft im Bereich von 0,2 bis 2,5 µm, insbesondere im Bereich von 0,3 bis 2 µm und ganz besonders bevorzugt im Bereich von 0,3 bis 1,5 µm, wobei die Deckschichten A und C gleich oder verschieden dick sein können.

Die Erfindung betrifft weiterhin ein Verfahren zur Herstellung der erfindungsgemäßen Mehrschichtfolie nach dem an sich bekannten Coextrusionsverfahren.

Im Rahmen dieses Verfahrens wird so vorgegangen, daß die den einzelnen Schichten der Folie entsprechenden Schmelzen durch eine Flachdüse coextrudiert werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Coronabehandlung vorgesehenen Oberflächenschicht coronabehandelt wird.

Die biaxiale Streckung (Orientierung) wird im allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist.

Zunächst wird wie beim Coextrusionsverfahren üblich das Polymere bzw. die Polymermischung der einzelnen Schichten in einem Extruder komprimiert und verflüssigt, wobei die gegebenenfalls zugesetzten Additive bereits im Polymer bzw. in der Polymermischung enthalten sein können. Insbesondere die Harze werden bevorzugt in Form eines Masterbatches zugegeben. Die Schmelzen werden dann gleichzeitig durch eine Flachdüse (Breitschlitzdüse) gepreßt, und die ausgepreßte mehrschichtige Folie wird auf einer oder mehreren Abzugswalzen abgezogen, wobei sie abkühlt und sich verfestigt.

Die so erhaltene Folie wird dann längs und quer zur Extrusionsrichtung gestreckt, was zu einer Orientierung der Molekülketten führt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens. Die erfindungsgemäßen Längsstreckungsverhältnisse sind 4,0 bis 9, vorzugsweise 4,5 bis 8,0. Dementsprechend sind auch die Querstreckverhältnisse zu wählen. Vorzugsweise ergibt sich hier ein Bereich von 5,0 bis 11,0.

An die biaxiale Streckung der Folie schließt sich ihre Thermofixierung (Wärmebehandlung) an, wobei die Folie etwa 0,1 bis 10 s lang bei einer Temperatur von 100 bis 160 °C gehalten wird. Anschließend wird die Folie in üblicher Weise mit einer Aufwickeleinrichtung aufgewickelt.

Es hat sich als besonders günstig erwiesen, die Abzugswalze oder -walzen, durch die die ausgepreßte Folie abgekühlt und verfestigt wird, durch einen Heiz- und Kühlkreislauf bei einer Temperatur von 10 bis 100 °C, vorzugsweise 20 bis 70 °C, zu halten.

Die Temperaturen, bei denen die Längs- und Querstreckung durchgeführt werden, können in einem relativ großen Bereich variieren und richten sich nach der jeweiligen Zusammensetzung der Basis- und der Deckschichtmischung und nach den gewünschten Eigenschaften der Folie. Im allgemeinen wird die Längsstreckung vorzugsweise bei 80 bis 150 °C und die Querstreckung vorzugsweise bei 120 bis 170 °C durchgeführt.

Gegebenenfalls kann/können wie oben erwähnt nach der biaxialen Streckung eine oder beide Oberfläche/n der Folie nach einer der bekannten Methoden corona- oder flammbehandelt werden. Die Behandlungsintensität liegt im allgemeinen im Bereich von 37 bis 50 mN/m, vorzugsweise 38 bis 45 mN/m.

Bei der Coronabehandlung wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 5 bis 20 kV und 5 bis 30 kHz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen.

Für eine Flammbehandlung mit polarisierter Flamme (vgl. US-A-4,622,237) wird eine elektrische Gleichspannung zwischen einem Brenner (negativer Pol) und einer Kühlwalze angelegt. Die Höhe der angelegten Spannung beträgt zwischen 400 und 3 000 V, vorzugsweise liegt sie im Bereich von 500 bis 2 000 V. Durch die angelegte Spannung erhalten die ionisierten Atome eine erhöhte Beschleunigung und treffen mit größerer kinetischer Energie auf die Polymeroberfläche. Die chemischen Bindungen innerhalb des Polymermoleküls werden leichter aufgebrochen, und die Radikalbildung geht schneller vonstatten. Die thermische Belastung des Polymeren ist hierbei weitaus geringer als bei der Standardflammbehandlung, und es können Folien erhalten werden, bei denen die Siegeleigenschaften der behandelten Seite sogar besser sind als diejenigen der nicht behandelten Seite.

Bei einer Metallisierung der Folie besteht die Metallschicht bevorzugt aus Aluminium. Doch sind auch andere Materialien geeignet, die sich in Form einer dünnen, zusammenhängenden Schicht aufbringen lassen. Insbesondere ist z.B. Silizium geeignet, welches im Vergleich zu Aluminium eine transparente Barriereschicht ergibt. Die oxidische Schicht besteht bevorzugt aus Oxiden von Elementen der II., III. oder IV. Hauptgruppe des Periodensystems, insbesondere Oxide des Magnesiums, Aluminiums oder Siliciums. Allgemein werden solche metallischen oder oxidischen Materialien verwendet, die bei vermindertem Druck bzw. im Vakuum aufgebracht werden können. Die Dicke der aufgebrachten Schicht beträgt allgemein 10 bis 100 nm.

Ein Vorteil der Erfindung besteht darin, daß die Herstellungskosten der erfindungsgemäßen Folie vergleichbar sind mit denjenigen nach dem Stand der Technik. Die sonstigen verarbeitungs- und gebrauchsrelevanten Eigenschaften der erfindungsgemäßen Folie bleiben im wesentlichen unverändert oder sind sogar verbessert. Daneben ist bei der Herstellung der Folie gewährleistet, daß das Regenerat in einer Konzentration von 20 bis 50 Gew.-%, bezogen auf das Gesamtgewicht der Folie, wieder verwendet werden kann, ohne daß dabei die physikalischen Eigenschaften der Folie nennenswert negativ beeinflußt werden.

Die Folie eignet sich hervorragend zur Verpackung von licht- und/oder luftempfindlichen Nahrungs- und Genußmitteln.

Zusammengefaßt zeichnet sich die erfindungsgemäße Folie dadurch aus, daß sie eine hervorragende Sauerstoffbarriere hat, nachdem sie metallisiert oder mit oxidischen Materialien beschichtet worden ist. Außerdem besitzt sie das gewünschte gute Verarbeitungsverhalten und zeichnet sich durch einen hohen Glanz und eine nierdrige Trübung aus.

Der Glanz der Folie ist größer als 120. In einer bevorzugten Ausführungsform beträgt der Glanz mehr als 125 und in einer besonders bevorzugten Ausführungsform mehr als 130. Die Folie eignet sich daher insbesondere für die Bedruckung oder für die Metallisierung. Der hohe Glanz der Folie überträgt sich auf den Druck oder die aufgebrachte Metallschicht und verleiht somit der Folie das gewollte werbewirksame Aussehen.

Die Trübung der Folie ist kleiner als 3,0. In einer bevorzugten Ausführungsform beträgt die Trübung der Folie weniger als 2,5 und in einer besonders bevorzugten Ausführungsform weniger als 2,0.

Die Folie besitzt eine Sauerstoffbarriere von kleiner als 30 g $m^2$ $d^{-1}$ $bar^{-1}$, vorzugsweise kleiner als 27 g $m^2$ $d^{-1}$ $bar^{-1}$ und besonders bevorzugt kleiner als 23 g $m^{-2}d^{-1}bar^{-1}$, nachdem sie auf der Folienoberfläche A metallisiert worden ist.

Der Reibungskoeffizient auf zumindestens einer Folienoberfläche ist kleiner als 0,6. In einer bevorzugten Ausführungsform beträgt der Reibungskoeffizient der Folie dort weniger als 0,55 und in einer besonders bevorzugten Ausführungsform weniger als 0,50.

Die nachstehende Tabelle (Tabelle 1) faßt die wichtigsten erfindungsgemäßen Folieneigenschaften noch einmal zusammen.

Zur Charakterisierung der Rohstoffe und der Folien wurden die folgenden Meßmethoden benutzt:

## Tabelle 1

|  | erfindungsgemäßer Bereich | bevorzugt | besonders bevorzugt | Einheit | Meßmethode |
|---|---|---|---|---|---|
| Planare Orientierung | > 0,0138 | > 0,0140 | > 0,0143 |  |  |
| Brechungsindex $n_{ND}$ | < 0,1495 | < 0,1493 | < 0,1490 |  |  |
| Glanz (Meßwinkel 20°)[i] | > 120 | > 125 | > 130 |  | DIN 67 530 |
| Trübung[i] | < 3,0 | < 2,5 | < 2,0 | % | ASTM-D 1003-52 |
| Sauerstoffpermeation der metallisierten Folie | < 30 | < 27 | < 23 | $g\ m^{-2}\ d^{-1}\ bar^{-1}$ | DIN 53 380, Teil 3 |
| Reibungskoefizient zumindestens einer Deckschicht gegen sich selbst | < 0,6 | < 0,55 | < 0,50 |  | DIN 53 375 |
| mittlere Rauhigkeit $R_a$ zumindestens einer Deckschicht | 30-80 | 35-70 | 40-60 | nm | DIN 4768, bei einem Cut-off von 0,25 mm |

[i] Gemessen an der nicht metallisierten Folie

(1) Optische Dichte

Zur Messung der optischen Dichte wurde das Densitometer Macbeth TD-904 von Macbeth (Division of Kollmorgen Instruments Corp.) eingesetzt. Die optische Dichte ist definiert als OD = - lg $I/I_0$, wobei I: die Intensität des eingestrahlten Lichtes, $I_0$: die Intensität des ausgestrahlten Lichtes und $I/I_0$:die Transmission bedeuten.

(2) Sauerstoffbarriere

Die Messung der Sauerstoffbarriere an den metallisierten Folien erfolgte mit einem OX-TRAN 2/20 von Mocon Modern Controls (USA) entsprechend DIN 53 380, Teil 3.

(3) Bestimmung der planaren Orientierung delta p

Die Bestimmung der planaren Orientierung erfolgt über die Messung der Brechungsindizes mit dem Abbe-Refraktometer nach der internen Betriebsvorschrift 24.

Probenvorbereitung

Probengröße: Probenlänge:60 bis 100 mm

Probenbreite: entspricht Prismenbreite von 10 mm

Zur Bestimmung von $n_{MD}$ und $n_\alpha$ (=$n_{ND}$) muß die zu messende Probe aus der Folie ausgeschnitten werden, bei der die Laufkannte der Probe exakt mit der TD-Richtung übereinstimmen muß. Zur Bestimmung von $n_{TD}$ und $n_\alpha$ (=$n_{ND}$) muß die zu messende Probe aus der Folie ausgeschnitten werden, bei der die Laufkannte der Probe exakt mit der MD-Richtung übereinstimmen muß. Die Proben sind aus der Mitte der Folienbahn zu entnehmen. Es ist dafür Sorge zu tragen, daß das Abbe-Refraktometer eine Temperatur von 23 °C hat.
Auf das vor der Messung gut gesäuberte untere Prisma wird mit Hilfe eines Glasstabes ein wenig Dijodmethan (N=1,745) bzw. Dijodmethan-Bromnaphthalin-Gemisch aufgetragen. Der Brechungsindex des Gemisches muß größer als 1,685 sein. Darauf wird zuerst die in TD-Richtung ausgeschnittene Probe aufgelegt, so daß die gesamte Prismenoberfläche bedeckt ist. Mit Hilfe eines Papiertaschentuches wird nun die Folie fest auf das Prisma aufgebügelt, so daß die Folie fest und glatt aufliegt. Die überflüssige Flüssigkeit muß abgesaugt werden. Danach wird ein wenig von der Meßflüssigkeit auf die Folie getropft. Das zweite Prisma wird heruntergeklappt und fest angedrückt. Nun wird mit Hilfe der rechten Rändelschraube die Anzeigeskala soweit gedreht, bis im Bereich 1,62 bis 1,68 ein Übergang von hell auf dunkel im Sichtfenster zu sehen ist. Ist der Übergang von hell auf dunkel nicht scharf, wird mit Hilfe der oberen Rändelschraube die Farben so zusammengeführt, daß nur eine helle und eine dunkle Zone sichtbar ist. Die scharfe Übergangslinie wird mit Hilfe der unteren Rändelschraube in den Kreuzungspunkt der beiden (im Okular) diagonalen Linien gebracht. Der nun in der Meßskala angezeigte Wert wird abgelesen und in das Meßproztokoll eingetragen. Dies ist der Brechungsindex in Maschinenrichtung $n_{MD}$. Nun wird die Skala mit der unteren Rändelschraube soweit verdreht, daß der im Okular sichtbare Bereich zwischen 1,49 und 1,50 zu sehen ist. Jetzt wird der Brechungsindex in $n_\alpha$ bzw. $n_{ND}$ (in Dickenrichtung der Folie) ermittelt. Damit der nur schwach sichtbare Übergang besser zu sehen ist, wird auf das Okular eine Polarisationsfolie gelegt. Diese ist solange zu drehen, bis der Übergang deutlich zu sehen ist. Es gilt das gleiche wie bei der Bestimmung von $n_{MD}$. Ist der Übergang von hell auf dunkel nicht scharf (farbig), dann werden mit Hilfe der oberen Rändelschraube die Farben zusammengeführt, so daß ein scharfer Übergang zu sehen ist. Diese scharfe Übergangslinie wird mit Hilfe der unteren Rändelschraube in den Kreuzungspunkt der beiden diagonalen Linien gebracht und den auf der Skala angezeigten Wert abgelesen und in die Tabelle eingetragen.
Anschließend wird die Probe gedreht und die entsprechenden Brechungsindizes $n_{MD}$ und $n_\alpha$ (=$n_{ND}$) der anderen Oberflächenseite gemessen und in eine entsprechende Tabelle eingetragen.
Nach der Bestimmung der Brechungsindizes in MD-Richtung bzw. in Dickenrichtung wird der in MD-Richtung herausgeschnittene Probenstreifen aufgelegt und entsprechend die Brechungsindizes $n_{TD}$ und $n_\alpha$ (=$n_{ND}$) bestimmt. Der Streifen wird umgedreht und die Werte für die B-Seite gemessen. Die Werte für die A-Seite und die B-Seite werden zu mittleren Brechungswerten zusammengefasst. Die
Orientierungswerte werden dann aus den Brechungsindizes nach den folgenden Formeln berechnet:

$$\text{deltan} = n_{MD} - n_{TD}$$

$$\text{delta p} = (n_{MD} + n_{TD})/2 - n_{ND}$$

$$n_{av} = (n_{MD} + n_{TD} + n_{ND})/3$$

(4) Reibung

Die Reibung wurde nach DIN 53 375 bestimmt. Die Reibungszahl wurde 14 Tage nach der Produktion gemessen.

(5) Oberflächenspannung

Die Oberflächenspannung wurde mittels der sogenannten Tintenmethode (DIN 53 364) bestimmt.

(6) Trübung

Die Trübung der Folie wurde nach ASTM-D 1003-52 gemessen. Die Trübungsmessung nach Hölz wurde in Anlehnung an ASTM-D 1003-52 bestimmt, wobei jedoch zur Ausnutzung des optimalen Meßbereichs an vier übereinanderliegenden Folienlagen gemessen und anstelle einer 4E-Lochblende eine 1°-Spaltblende eingesetzt wurde.

(7) Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° oder 60° eingestellt. Ein Lichtstrahl trifft unter dem eingestellten Einstrahlwinkel auf die ebene Prüffläche und werden von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

(8) Bestimmung der Korngrößen auf Folienoberflächen

Die Bestimmung der Größenverteilung von Antiblockmittelteilchen (Korngrößenver teilung) auf Folienoberflächen erfolgt mit einem Rasterelektronenmikroskop (z.B. DSM 982 Gemini, Fa. Leo GmbH (Zeiss)) Verbindung mit einem Bildanalysensystem. Die gewählten Vergrößerungen waren in allen Fällen 1700 fach.

Für diese Messungen werden Folienproben flach auf einen Probenhalter aufgebracht. Anschließend werden diese unter einem Winkel $\alpha$ mit einer dünnen Metallschicht (z.B. aus Silber) schräg bedampft. Dabei ist $\alpha$ der Winkel zwischen Probenoberfläche und der Ausbreitungsrichtung des Metalldampfes. Durch diese Schrägbedampfung entsteht an den Antiblockmittelteilchen ein Schattenwurf. Da die Schatten noch nicht elektrisch leitfähig sind, kann die Probe anschließend noch mit einem zweiten Metall (z.B. Gold) bedampft werden, wobei der Metalldampf dabei senkrecht auf die Probenoberfläche auftrifft.

Die so präparierten Probenoberflächen werden in einem Rasterelektronenmikroskop (REM) abgebildet. Die Schatten der Antiblockmittelteilchen sind infolge des Materialkontrastes sichtbar. Die Probe wird im REM so orientiert, daß die Schatten parallel zum unteren Bildrand (x-Richtung) verlaufen. In dieser Einstellung werden REM-Bilder angefertigt und in ein Bildanalysesystem übertragen. Mit diesem Bildanalysesystem werden nun die Längen der Schatten (in x-Richtung) und ihre maximale Ausdehnung in y-Richtung (parallel zum senkrechten Bildrand) vermessen.

Der Durchmesser D der Antiblockmittelteilchen in Höhe der Probenoberfläche ist gleich der maximalen Ausdehnung der Schatten d in y-Richtung. Die Höhe der Antiblockmittelteilchen, gemessen ab der Folienoberfläche errechnet sich aus dem Bedampfungswinkel $\alpha$ und der Schattenlänge L und unter Kenntnis der für die REM-Abbildung gewählten Vergrößerung V zu:

$$h = (\tan (\alpha) * L)/V$$

Um eine genügend hohe statistische Sicherheit zu erreichen, werden einige tausend Antiblockmittelteilchen vermessen. Für die Durchmesser und Höhen der Teilchen werden dann mit Hilfe der bekannten statistischen Methoden Häufigkeitsverteilungen erstellt. Für den Teilchendurchmesser D wird dazu eine Klassenbreite von 0,2 µm und für die Teilchenhöhe h eine Klassenbreite von 0,05 µm gewählt.

(9) Rauhigkeit

Die Rauhigkeit $R_a$ der Folie wurde nach DIN 4768 bei einem Cut-off von 0,25 mm bestimmt.

(10) Schmelzflußindex

Der Schmelzflußindex wurde in Anlehnung an DIN 53 735 bei 21,6 N Belastung und 230 C bzw. bei 50 N Belastung und 190 °C gemessen.

(11) Schmelzpunkt

DSC-Messung, Maximum der Schmelzkurve, Aufheizgeschwindigkeit 20 C/min.

**Beispiel 1**

Es wurde durch Coextrusion und anschließende stufenweise Orientierung in Längsund Querrichtung eine transparente zweischichtige Folie mit AB-Aufbau und einer Gesamtdicke von 20 μm hergestellt. Die Dicke der jeweiligen Schichten ist der Tabelle 2 zu entnehmen.
Deckschicht A, Mischung aus:

84,00 Gew.-%    Isotaktisches Polypropylen mit einem MFI von 4 g/10 min
16,00 Gew.-%    Masterbatch aus 99,0 Gew.-% Polypropylen mit einem MFI von 4 g/10 min und 0,5 Gew.-% Sylobloc 44 (kolloidales $SiO_2$ der Fa. Grace) und 0,5 Gew.-% Aerosil TT 600 (kettenartiges $SiO_2$ der Fa. Degussa)

Basisschicht B:

89,8 Gew.-%    Polypropylen mit einem MFI von 4 g/10 min
0,2 Gew.-%    N,N-bis-ethoxyalkylamin
10,00 Gew.-%    Masterbatch aus 99,0 Gew.-% Polypropylen mit einem MFI von 4 g/10 min und 0,5 Gew.-% Sylobloc 44 (kolloidales $SiO_2$ der Fa. Grace) und 0,5 Gew.-% Aerosil TT 600 (kettenartiges $SiO_2$ der Fa. Degussa)

Die Herstellungsbedingungen in den einzelnen Verfahrensschritten waren:

| Extrusion | Temperaturen          A-Schicht | 270 °C |
| | B-Schicht | 270°C |
| | Temperatur der Abzugswalze | 30 °C |
| | Düsenspaltweite | 1 mm |
| | Temperatur der Abzugswalze | 30 °C |
| Längsstreckung | Temperatur | 80 - 140 °C |
| | Längsstreckverhältnis | 5,0 |
| Querstreckung | Temperatur | 160 °C |
| | Querstreckverhältnis: | 10,0 |
| Fixierung: | Temperatur: | 150 °C |
| Dauer: | | 2s |

Die Folie zeichnet sich durch sehr gute optische Eigenschaften und durch ein gutes Verabeitungsverhalten aus (vgl. Tabelle 3).
Nach Herstellung der Folie (nach diesem Beispiel und allen folgenden Beispielen) wurde diese auf der A-Seite in einem industriellen Metallisierer mit Aluminium unter Vakuum bedampft. Die Beschichtungsgeschwindigkeit betrug 8 m/s und die optische Dichte 2,6.
Die Folie hatte die geforderte hohe Sauerstoffbarriere. Der Folienaufbau und die erzielten Eigenschaften derart hergestellter Folien sind in den Tabellen 2 und 3 dargestellt.

**Beispiel 2**

In ähnlicher Weise wie in Beispiel 1 wurde durch Coextrusion und anschließende stufenweise Orientierung in Längs- und Querrichtung eine transparente dreischichtige Folie mit ABA-Aufbau und einer Gesamtdicke von 20 um hergestellt.

Deckschicht A, Mischung aus:

| | |
|---|---|
| 84,00 Gew.-% | Isotaktisches Polypropylen mit einem MFI von 4 g/10 min |
| 16,00 Gew.-% | Masterbatch aus 99,0 Gew.-% Polypropylen mit einem MFI von 4 g/10 min und 0,5 Gew.-% Sylobloc 44 H (kolloidales $SiO_2$ der Fa. Grace) und 0,5 Gew.-% Aerosil TT 600 (kettenartiges $SiO_2$ der Fa. Degussa) |

Basisschicht B:

| | |
|---|---|
| 89,8 Gew.-% | Polypropylen mit einem MFI von 4 g/10 min |
| 0,2 Gew.-% | N,N-bis-ethoxyalkylamin |

Die Verfahrensbedingungen waren für alle Schichten wie in Beispiel 1 gewählt.

**Beispiel 3**

In ähnlicher Weise wie in Beispiel 2 wurde durch Coextrusion und anschließende stufenweise Orientierung in Längs- und Querrichtung eine transparente dreischichtige Folie mit ABC-Aufbau und einer Gesamtdicke von 20μm hergestellt. Im Vergleich zu Beispiel 2 wurde nur die Deckschicht A geändert.

Deckschicht A, Mischung aus:

| | |
|---|---|
| 96,0 Gew.-% | Isotaktisches Polypropylen mit einem MFI von 4 g/10 min |
| 4,00 Gew.-% | Masterbatch aus 99,0 Gew.-% Polypropylen mit einem MFI von 4 g/10 min und 0,5 Gew.-% Sylobloc 44 H (kolloidales $SiO_2$ der Fa. Grace) und 0,5 Gew.-% Aerosil TT 600 (kettenartiges $SiO_2$ der Fa. Degussa) |

DeckschichtC, Mischung aus:

| | |
|---|---|
| 84,00 Gew.-% | Isotaktisches Polypropylen mit einem MFI von 4 g/10 min |
| 16,00 Gew.-% | Masterbatch aus 99,0 Gew.-% Polypropylen mit einem MFI von 4 g/10 min und 0,5 Gew.-% Sylobloc 44 H (kolloidales $SiO_2$ der Fa. Grace) und 0,5 Gew.-% Aerosil TT 600 (kettenartiges $SiO_2$ der Fa. Degussa) |

Die Verfahrensbedingungen waren für alle Schichten wie in Beispiel 1 gewählt.

**Beispiel 4**

In ähnlicher Weise wie in Beispiel 2 wurde durch Coextrusion und anschließende stufenweise Orientierung in Längs- und Querrichtung eine transparente dreischichtige Folie mit ABC-Aufbau und einer Gesamtdicke von 20 μm hergestellt. Im Vergleich zu Beispiel 2 wurde nur die Basisschicht A geändert.

Deckschicht A, Mischung aus:

| | |
|---|---|
| 99,0 Gew.-% | Polypropylen mit einem MFI von 4 g/10 min |
| 1,00 Gew.-% | Masterbatch aus 99,0 Gew.-% Polypropylen mit einem MFI von 4 g/10 min und 0,5 Gew.-% Sylobloc 44 H (kolloidales $SiO_2$ der Fa. Grace) und 0,5 Gew.-% Aerosil TT 600 (kettenartiges $SiO_2$ der Fa. Degussa) |

**Beispiel 5**

Es wurde durch Coextrusion und anschließende stufenweise Orientierung in Längsund Querrichtung eine transparente dreischichtige Folie mit ABC-Aufbau und einer Gesamtdicke von 20 μm hergestellt. Im Vergleich zu Beispiel 3 wurde nur die Bedingungen in der Längsstreckung geändert.

Die Herstellungsbedingungen in den einzelnen Verfahrensschritten waren:

| Extrusion | Temperaturen    A-Schicht | 270 °C |
|---|---|---|
| | B-Schicht | 270 °C |
| | C-Schicht | 270 °C |
| | Temperatur der Abzugswalze | 30 °C |
| | Düsenspaltweite | 1 mm |
| | Temperatur der Abzugswalze | 30 °C |
| Längsstreckung | Temperatur | 80 - 135 °C |
| | Längsstreckverhältnis | 5,0 |
| Querstreckung | Temperatur | 160 °C |
| | Querstreckverhältnis | 10,0 |
| Fixierung | Temperatur | 150 °C |
| Dauer | | 2 s |

**Beispiel 6**

In ähnlicher Weise wie in Beispiel 3 wurde durch Coextrusion und anschließende stufenweise Orientierung in Längs- und Querrichtung eine transparente dreischichtige Folie mit ABC-Aufbau und einer Gesamtdicke von 20 μm hergestellt. Im Vergleich zu Beispiel 3 wurde nur die Basisschicht A geändert.
Deckschicht A, Mischung aus:

86,0 Gew.-%    Polypropylen mit einem MFI von 4 g/10 min
4,00 Gew.-%    Masterbatch aus 99,0 Gew.-% Polypropylen mit einem MFI von 4 g/10 min und 0,5 Gew.-% Sylobloc 44 H (kolloidales $SiO_2$ der Fa. Grace) und 0,5 Gew.-% Aerosil TT 600 (kettenartiges $SiO_2$ der Fa. Degussa)
10,0 Gew.-%    Kohlenwasserstoffharz (®Regalrez 1139 von Fa. Hercules Inc.) mit einer Erweichungstemperatur von 140 °C und einem Molekulargewicht von 2500

**Vergleichsbeispiel**

Es wurde durch Coextrusion und anschließende stufenweise Orientierung in Längsund Querrichtung eine transparente dreischichtige Folie mit ABC-Aufbau und einer Gesamtdicke von 20 μm hergestellt. Im Vergleich zu Beispiel 3 wurde nur die Bedingungen in der Längsstreckung geändert.
Die Herstellungsbedingungen in den einzelnen Verfahrensschritten waren:

| Extrusion | Temperaturen    A-Schicht | 270 °C |
|---|---|---|
| | B-Schicht | 270 °C |
| | C-Schicht | 270 °C |
| | Temperatur der Abzugswalze | 30 °C |
| | Düsenspaltweite | 1 mm |
| | Temperatur der Abzugswalze | 30 °C |
| Längsstreckung | Temperatur | 80 - 143 °C |
| | Längsstreckverhältnis | 5,0 |
| Querstreckung | Temperatur | 160 °C |
| | Querstreckverhältnis | 10,0 |
| Fixierung | Temperatur | 150 °C |
| Dauer | | 2 s |

## Tabelle 2

| Bei-spiel | Folien-dicke µm | Folien-aufbau | Schicht-dicken A B C µm | Pigmente in den Schichten A | Pigmente in den Schichten B | Pigmente in den Schichten C | mittlerer Pigment-durchmesser A | mittlerer Pigment-durchmesser B | mittlerer Pigment-durchmesser C | Pigmentkonzentration A ppm | Pigmentkonzentration B ppm | Pigmentkonzentration C ppm |
|---|---|---|---|---|---|---|---|---|---|---|---|---|
| B 1 | 20 | AB | 1,5/18,5 | Sylobloc 44 H | Sylobloc 44 H | keine | 2,5 | 2,5 | | 800 | 500 | 0 |
| | | | | Aerosil TT 600 | Aerosil TT 600 | | 0,04 | 0,04 | | 800 | 500 | 0 |
| B 2 | 20 | ABA | 1,5/17,0/1,5 | Sylobloc 44 H | keine | Sylobloc 44 H | 2,5 | | 2,5 | 800 | 0 | 800 |
| | | | | Aerosil TT 600 | | Aerosil TT 600 | 0,04 | | 0,04 | 800 | 0 | 800 |
| B 3 | 20 | ABC | 1,5/17,0/1,5 | Sylobloc 44 H | keine | Sylobloc 44 H | 2,5 | | 2,5 | 200 | 0 | 800 |
| | | | | Aerosil TT 600 | | Aerosil TT 600 | 0,04 | | 0,04 | 200 | 0 | 800 |
| B 4 | 20 | ABC | 1,5/17,0/1,5 | Sylobloc 44 H | keine | Sylobloc 44 H | 2,5 | | 2,5 | 50 | 0 | 800 |
| | | | | Aerosil TT 600 | | Aerosil TT 600 | 0,04 | | 0,04 | 50 | 0 | 800 |
| B 5 | 20 | ABC | 1,5/17,0/1,5 | Sylobloc 44 H | keine | Sylobloc 44 H | 2,5 | | 2,5 | 200 | 0 | 800 |
| | | | | Aerosil TT 600 | | Aerosil TT 600 | 0,04 | | 0,04 | 200 | 0 | 800 |
| B 6 | 20 | ABC | 1,5/17,0/1,5 | Sylobloc 44 H | keine | Sylobloc 44 H | 2,5 | | 2,5 | 200 | 0 | 800 |
| | | | | Aerosil TT 600 | | Aerosil TT 600 | 0,04 | | 0,04 | 200 | 0 | 800 |
| VB 1 | 20 | ABC | 1,5/17,0/1,5 | Sylobloc 44 H | keine | Sylobloc 44 H | 2,5 | | 2,5 | 200 | 0 | 800 |
| | | | | Aerosil TT 600 | | Aerosil TT 600 | 0,04 | | 0,04 | 200 | 0 | 800 |

## Tabelle 3

| Bei-spiel | Planare Orientie-rung delta p | Sauerstoff-barriere $cm^3/(m^2$ bar d) | Reibung µk A/A (B/B) | C/C | Rauhigkeit $R_a$ A-Seite (B-Seite) nm | C-Seite | Glanz[1] A-Seite (B-Seite) | C-Seite | Trü-bung[1] % | Verarbei-tungsver-halten |
|---|---|---|---|---|---|---|---|---|---|---|
| B 1 | 0,0142 | 28 | 0, 52 | 0,58 | 60 | 40 | 125 | 130 | 2,8 | gut |
| B 2 | 0,0143 | 27 | 0, 54 | 0, 53 | 60 | 60 | 127 | 126 | 1,7 | gut |
| B 3 | 0,0143 | 25 | 0,6 | 0,55 | 25 | 56 | 140 | 122 | 1,5 | gut |
| B 4 | 0,0143 | 23 | 1,7 | 0,56 | 15 | 55 | 145 | 122 | 1,4 | gut |
| B 5 | 0,0146 | 20 | 0,6 | 0,55 | 25 | 55 | 140 | 122 | 1,5 | gut |
| B 6 | 0,0142 | 22 | 0,7 | 0,57 | 23 | 50 | 142 | 122 | 1,4 | gut |
| VB 1 | 0,0134 | 38 | 0,6 | 0,54 | 24 | 55 | 133 | 124 | 1,5 | gut |

[1] Gemessen an der nicht metallisierten Folie

A-Seite: metallisierte Deckschicht. Die Sauerstoffbarriere wurde an der metallisierten Folie gemessen

C-Seite: unmetallisierte Deckschicht

EP 0 987 289 A1

**Patentansprüche**

1. Biaxial orientierte, ein- oder mehrschichtige Polypropylenfolie mit einer Basisschicht, die zu mindestens 80 Gew.-% aus einem thermoplastischen Polypropylen besteht, die interne und/oder inerte Partikel enthält, wobei die Folie dadurch gekennzeichnet ist, daß ihre planare Orientierung delta p größer als 0,0138 ist.

2. Polypropylenfolie nach Anspruch 1, dadurch gekennzeichnet, daß die planare Orientierung der Folie delta p größer als 0,0140 ist, vorzugsweise größer als 0,0143 ist.

3. Polypropylenfolie nach Anspruch 1 oder 2, dadurch gekennzeichnet, daß die metallisierte Folie eine Sauerstoffbarriere aufweist, die kleiner ist als 30 $cm^3/m^2$ bar d.

4. Polypropylenfolie nach einem oder mehreren der Ansprüche 1 bis 3, dadurch gekennzeichnet, daß die metallisierte Folie eine Sauerstoffbarriere aufweist, die kleiner ist als 27 $cm^3/m^2$ bar d.

5. Polypropylenfolie nach einem oder mehrere der Ansprüche 1 bis 4, dadurch gekennzeichnet, daß die Folie mindestens eine Deckschicht aufweist.

6. Polypropylenfolie nach Anspruch 5, dadurch gekennzeichnet, daß die äußere(n) Deckschich(ten) eine Dicke von 0,1 bis 4,0 $\mu$m aufweist(en).

7. Polypropylenfolie nach Anspruch 5 oder 6, dadurch gekennzeichnet, daß die Folie dreischichtig aufgebaut ist und aus der äußeren Deckschicht A, der Basisschicht B und einer anderen Deckschicht C besteht, welche auf der der Deckschicht A gegenüberliegenden Seite der Basisschicht B aufgebracht ist.

8. Polypropylenfolie nach Anspruch 7, dadurch gekennzeichnet, daß die Deckschichten pigmentiert sind.

9. Polypropylenfolie nach einem oder mehreren der Ansprüche 5 bis 8, dadurch gekennzeichnet, daß die Deckschichten unterschiedlich pigmentiert sind.

10. Verfahren zur Herstellung einer biaxial orientierten, ein- oder mehrschichtigen Polypropylenfolie gemäß Anspruch 1, bei dem Polypropylenschmelzen entsprechend den Zusammensetzungen der Deck- und Basisschichten einer Monodüse oder einer Mehrschichtdüse zugeführt werden, aus dieser auf eine Abkühlwalze extrudiert werden und die so erhaltene Vorfolie anschließend biaxial verstreckt und hitzefixiert wird, wobei die planare Orientierung delta p der Folie größer als 0,0138 ist.

11. Verfahren zur Herstellung einer biaxial orientierten Polypropylenfolie nach Anspruch 10, bei dem Regenerat in einer Konzentration von 10 bis 50 Gew.-%, bezogen auf das Gesamtgewicht der Folie, der Extrusionsdüse zugeführt wird.

12. Verwendung der Folie nach einem oder mehreren Ansprüchen 1 bis 10 zum Verpacken von Lebens- und Genußmittel.

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 4 405 775 A (HASHIMOTO FUKASHI) 20. September 1983 (1983-09-20) * das ganze Dokument * --- | 1,2,10, 12 | C08J5/18 B32B27/32 B32B15/08 C23C14/20 B29C55/14 //C08L23/12, B32B27/20, B65D65/40 |
| X | GB 1 398 476 A (TOYO BOSEKI) 25. Juni 1975 (1975-06-25) * Seite 5, Tabelle 1, Vergleichsbeispiel 2 * *Seite 6, Tabelle 2, Beispiel 1 * * Seite 10, Tabelle 6, Vergleichsbeispiel 6 * --- | 1,2,10 | |
| X | EP 0 524 725 A (TORAY INDUSTRIES) 27. Januar 1993 (1993-01-27) * Beispiele 2,3; Tabelle 2 * * Vergleichsbeispiel 1, Tabelle 2 * * Ansprüche 1,4,8,10 * --- | 1-7,12 | |
| A | EP 0 747 212 A (HOECHST AG) 11. Dezember 1996 (1996-12-11) * Seite 2, Zeile 44 – Zeile 49 * * Seite 3, Zeile 35 – Zeile 46 * * Beispiele 5,6; Tabelle 1 * * Ansprüche 1-16 * --- | 1,2,5-12 | |
| A | US 5 425 996 A (WILKIE ANDREW F ET AL) 20. Juni 1995 (1995-06-20) * Spalte 5, Zeile 47 – Zeile 61 * * Ansprüche 1-15,18-20 * --- | 5-9 | RECHERCHIERTE SACHGEBIETE (Int.Cl.7) C08J C23C B32B B65D B29C |
| A | PATENT ABSTRACTS OF JAPAN vol. 1996, no. 04, 30. April 1996 (1996-04-30) & JP 07 329258 A (TORAY IND INC), 19. Dezember 1995 (1995-12-19) * Zusammenfassung * ----- | 1,2 | |

Der vorliegende Recherchenbericht wurde für alle Patentansprüche erstellt

| Recherchenort | Abschlußdatum der Recherche | Prüfer |
|---|---|---|
| MÜNCHEN | 23. Dezember 1999 | Lindner, T |

**ANHANG ZUM EUROPÄISCHEN RECHERCHENBERICHT**
**ÜBER DIE EUROPÄISCHE PATENTANMELDUNG NR.**    EP 99 11 7856

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-12-1999

| Im Recherchenbericht angeführtes Patentdokument | Datum der Veröffentlichung | Mitglied(er) der Patentfamilie | Datum der Veröffentlichung |
|---|---|---|---|
| US 4405775 A | 20-09-1983 | JP 57008118 A | 16-01-1982 |
| | | DE 3124290 A | 13-05-1982 |
| | | FR 2484904 A | 24-12-1981 |
| | | GB 2078158 A,B | 06-01-1982 |
| | | IT 1194803 B | 28-09-1988 |
| GB 1398476 A | 25-06-1975 | JP 49088968 A | 26-08-1974 |
| | | JP 918768 C | 22-08-1978 |
| | | JP 49017858 A | 16-02-1974 |
| | | JP 52045744 B | 18-11-1977 |
| | | JP 1077834 C | 25-12-1981 |
| | | JP 49066769 A | 28-06-1974 |
| | | JP 56021581 B | 20-05-1981 |
| | | CA 1035519 A | 01-08-1978 |
| | | DE 2329790 A | 20-12-1973 |
| | | FR 2187830 A | 18-01-1974 |
| | | US 3952073 A | 20-04-1976 |
| | | US 4045515 A | 30-08-1977 |
| EP 0524725 A | 27-01-1993 | JP 4371567 A | 24-12-1992 |
| | | JP 5005175 A | 14-01-1993 |
| | | CA 2071254 A | 18-12-1992 |
| | | DE 69209579 D | 09-05-1996 |
| | | DE 69209579 T | 26-09-1996 |
| | | US 5283118 A | 01-02-1994 |
| EP 0747212 A | 11-12-1996 | DE 19519260 A | 05-12-1996 |
| | | DE 19548793 A | 03-07-1997 |
| | | AU 5465296 A | 12-12-1996 |
| | | AU 5465396 A | 12-12-1996 |
| | | AU 5465496 A | 12-12-1996 |
| | | AU 5465596 A | 12-12-1996 |
| | | AU 5465696 A | 12-12-1996 |
| | | AU 5465996 A | 12-12-1996 |
| | | AU 5466096 A | 12-12-1996 |
| | | BR 9602539 A | 27-10-1998 |
| | | BR 9602569 A | 06-10-1998 |
| | | BR 9602574 A | 06-10-1998 |
| | | BR 9602576 A | 06-10-1998 |
| | | BR 9602577 A | 06-10-1998 |
| | | BR 9602578 A | 06-10-1998 |
| | | BR 9602580 A | 06-10-1998 |
| | | CA 2178104 A | 01-12-1996 |
| | | CA 2178108 A | 01-12-1996 |
| | | CA 2178109 A | 01-12-1996 |
| | | CA 2178110 A | 01-12-1996 |

EPO FORM P0461

Für nähere Einzelheiten zu diesem Anhang : siehe Amtsblatt des Europäischen Patentamts, Nr. 12/82

## ANHANG ZUM EUROPÄISCHEN RECHERCHENBERICHT
## ÜBER DIE EUROPÄISCHE PATENTANMELDUNG NR.

EP 99 11 7856

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-12-1999

| Im Recherchenbericht angeführtes Patentdokument | Datum der Veröffentlichung | Mitglied(er) der Patentfamilie | Datum der Veröffentlichung |
|---|---|---|---|
| EP 0747212 A | | CA 2178111 A | 01-12-1996 |
| | | CA 2178112 A | 01-12-1996 |
| | | CA 2178113 A | 01-12-1996 |
| | | EP 0747211 A | 11-12-1996 |
| | | EP 0755779 A | 29-01-1997 |
| | | EP 0745477 A | 04-12-1996 |
| | | EP 0745637 A | 04-12-1996 |
| | | EP 0745638 A | 04-12-1996 |
| | | EP 0745639 A | 04-12-1996 |
| | | JP 9001649 A | 07-01-1997 |
| | | JP 9001650 A | 07-01-1997 |
| | | JP 9001651 A | 07-01-1997 |
| | | JP 9001652 A | 07-01-1997 |
| | | JP 9001653 A | 07-01-1997 |
| | | JP 9001654 A | 07-01-1997 |
| | | JP 9117994 A | 06-05-1997 |
| | | ZA 9604361 A | 09-12-1996 |
| | | ZA 9604362 A | 09-12-1996 |
| | | ZA 9604363 A | 09-12-1996 |
| | | ZA 9604364 A | 09-12-1996 |
| | | ZA 9604365 A | 09-12-1996 |
| | | ZA 9604366 A | 09-12-1996 |
| | | ZA 9604367 A | 09-12-1996 |
| US 5425996 A | 20-06-1995 | CA 2117575 A | 06-10-1995 |
| | | CA 2117659 A | 06-10-1995 |
| | | US 5443915 A | 22-08-1995 |
| JP 07329258 A | 19-12-1995 | KEINE | |

Für nähere Einzelheiten zu diesem Anhang : siehe Amtsblatt des Europäischen Patentamts, Nr.12/82